# EUROPÄISCHE PATENTSCHRIFT

(11) **EP 4 462 043 B1**
(45) Veröffentlichungstag und Bekanntmachung des Hinweises auf die Patenterteilung: **03.12.2025**
(21) Anmeldenummer: 24169712.7
(22) Anmeldetag: 11.04.2024
(51) Int. Cl.: F25B 49/02, H02J 13/00

(54) **LEISTUNGSLIMITIERUNG FÜR EINE WÄRMEPUMPE**
POWER LIMITATION FOR A HEAT PUMP
LIMITATION DE PUISSANCE POUR POMPE À CHALEUR

(30) Priorität: 11.04.2023 DE 102023109035
(43) Veröffentlichungstag der Anmeldung: 13.11.2024
(73) Patentinhaber: Vaillant GmbH, 42859 Remscheid NRW (DE)
(72) Erfinder: Lebernegg, Martin, 42855 Remscheid (DE); Leeser, Marion, 42659 Solingen (DE); Michalik, Claudia, 42699 Solingen (DE); Sepcke, Fabian, 51103 Köln (DE); Bosse, Thomas, 51379 Leverkusen (DE); Finke, Marleen, 42115 Wuppertal (DE)
(74) Vertreter: Popp, Carsten

(56) Entgegenhaltungen:
- EP-A1- 4 148 936
- US-A- 5 950 443
- US-B2- 9 182 166

## Beschreibung

Die Erfindung betrifft ein Verfahren zur Begrenzung der elektrischen Leistungsaufnahme eines thermischen Wärmeerzeugers, insbesondere einer elektrisch angetriebenen Luft/Wasser-Wärmepumpe. Solche Luft/Wasser-Wärmepumpen bestehen üblicherweise aus einem Kältekreis mit einem drehzahlvariablen Kompressor, zwei Kältemittel/Wasser Wärmeaustauschern, einem Expansionsorgan, und einem Lüfter.

Das vorliegende Verfahren der Leistungslimitierung ist dabei auch für andere Wärmepumpenbauarten wie Sole/Wasser- oder Grundwasser/Wasser-Wärmepumpen einsetzbar. In solchen Fällen kommen statt dem Lüfter geeignete Fluid-Umwälzpumpen zum Einsatz.

Elektrisch betriebene Wärmepumpen können dabei mindestens in einer ersten Betriebsart "Heizen" thermische Energie bereitstellen, die sich für Gebäudeheizwecke und/oder der Trinkwassererwärmung nutzen lässt. Dabei wird Umgebungswärme mittels des Lüfters und über den Luft/Kältemittel Wärmeaustauscher auf den Kältekreis übertragen, durch den elektrisch angetriebenen Kompressor mittels Druckanstieg auf ein höheres energetisches Niveau gebracht (oder "gepumpt") und über den Kältemittel/Wasser Wärmeaustauscher als Nutzwärme verfügbar gemacht.

Durch entsprechende technische Einrichtungen ist auch ein sogenannter Umkehrbetrieb "Kühlen" möglich, bei dem unter Aufwendung von elektrischer Energie durch den Kompressor thermische Energie über den Kältemittel/Wasser Wärmeaustauscher entzogen wird und mittels Lüfter und Luft/Kältemittel Wärmeaustauscher Abwärme an die Umwelt abgeführt wird.

Je nach Bauart und Betriebspunkt einer elektrisch angetriebenen Wärmepumpe beträgt das Verhältnis zwischen thermischer Nutzleistung und aufzubringender elektrischer Leistung etwa 2 bis 5, was als COP (coefficient of performance) bezeichnet wird. Dabei wird ein Großteil der elektrischen Leistung für den Kompressorbetrieb benötigt und nur ein kleiner Teil entfällt auf die weiteren Stromverbraucher wie Lüfter und andere Komponenten wie Umwälzpumpen, etc. Übliche nominale thermische Leistungen von elektrisch betriebenen Wärmepumpen selbst für Einzelhausanwendungen betragen 5 - 10 kW, je nach Anwendungsfall aber auch deutlich mehr. Damit ergibt sich unter Beachtung der zuvor genannten COP-Werte ein elektrischer Leistungsbedarf im kW-Bereich.

Aufgrund der erheblichen elektrischen Leistungsaufnahme stellt die zunehmende Verwendung von elektrisch betriebenen Wärmepumpen zu Heiz- und Kühlzwecken zusätzliche Herausforderungen an die Netzstabilität und insbesondere an das Management von Spitzenlastperioden. Hier soll die vorliegende Erfindung einerseits Energieversorgungsunternehmen befähigen, regulierend einzugreifen und andererseits einen gewissen Mindestkomfort in Form von bereitgestellter thermischer Energie für den Endverbraucher gewährleisten.

Technologische Konzepte zur Bewältigung sind aus den Schriften DE 10 2021 123 671 A1, der WO 2014/ 103 026 A1 und US 2019 / 0 193 521 A1 bekannt. In diesen Schriften werden Verbraucher abgeschaltet, aber eine Drehzahlreduzierung des Kompressors entsprechend dem externen Leistungslimit ist nicht beschrieben worden.

Die EP 4 148 936 A1 zeigt eine Technik zum Steuern einer Vielzahl von Lasten eines Hauses in einem elektrischen Versorgungsnetz, welches mit einer Zentraleinheit verbunden ist. Hierbei wird zunächst eine Lastspitze in dem elektrischen Versorgungsnetz bestimmt, worauf zunächst selektives Abschalten einer der Lasten erfolgt, um das elektrische Versorgungsnetz vor Überlastung zu schützen. Bei der Vielzahl von Lasten handelt es beispielsweise sich um eine Ladestation für ein Elektrofahrzeug, eine Wärmepumpe oder deren Kompressor oder eine elektrische Zusatzwarmwasseraufbereitung. Beim Wiedereinschalten können auch Komfortparameter verwendet werden.

Die US 5,950,443 beschreibt ein Verfahren zur Regelung des Leistungs- oder Durchflussminimums eines Kompressors für einen Kältekreis. Die US 9,182,166 B2 beschreibt die Regelung einer Fahrzeugwärmepumpe und die Art und Weise, wie aus der Außentemperatur und den Einstellungen der Klimaanlage der Leistungsbedarf des Kompressors ermittelt und das Vereisungsrisiko bewältigt werden.

Insbesondere bei elektrisch betriebenen Wärmepumpen ist das Konzept der sogenannten EVU-Sperre, EVU steht hier für Energieversorgungsunternehmen, bekannt: Mittels eines entsprechenden Rundsteuersignals, welches auf die Netzspannung aufmoduliert wird, kann das jeweilige Energieversorgungsunternehmen Wärmepumpen temporär abschalten, um so Lastspitzen zu glätten und so die Netzstabilität gewährleisten. Dazu kommt ein sogenannter Zweittarifanschluss über einen separaten Stromzähler und ein geeigneter Rundsteuerempfänger zum Einsatz. Übliche vertraglich vereinbarte Sperrzeiten liegen bei 1x2h bis 3x2h pro Tag.

Ist die EVU-Sperre aktiv, dann wird während dieser Dauer durch entsprechende geräteinterne Funktionen ein möglicher Kompressorbetrieb gesperrt. Auch eventuell vorhandene -und hier nicht näher beschriebene- weitere elektrisch betriebene Wärmeerzeuger wie Zusatzheizer können während einer EVU-Sperrzeit blockiert werden.

Mit dem Konzept der EVU-Sperre können elektrisch betriebene Wärmepumpen bezüglich des Kompressorbetriebszustands lediglich elektrisch unlimitiert oder vollständig blockiert betrieben werden. Ein sanfterer Eingriff in die elektrische Leistungsaufnahme der Wärmepumpe seitens des Energieversorgungsunternehmens bei eventuellen Netzinstabilitäten ist damit nicht möglich. Aufgrund der mittlerweile starken Marktdurchdringung von drehzahlvariablen Wämepumpenkompressoren, die so eine Anpassung der thermischen Leistung zulassen und damit auch variabel bezüglich der Leistungsaufnahme sind, ist das Konzept der EVU-Sperre technisch überholt. Es ist weiterhin zu berücksichtigen, dass EVU-Sperrzeiten einen erheblichen negativen Einfluss auf den Kundenkomfort haben und in der Regel mit apparativem Mehraufwand verbunden sind:

Wie bereits beschrieben ist je nach Bauart ein Zweittarifanschluss notwendig, um zu gewährleisten, dass der Kompressor unabhängig von anderen elektrisch betriebenen Komponenten der Wärmepumpe wie Steuerelektroniken oder Heizungspumpen spannungslos geschaltet werden kann. Da während der EVU-Sperrzeit keinerlei Heiz- oder Kühlleistung zur Verfügung steht, werden Wärmepumpen in der Regel entsprechend überdimensioniert ausgelegt und zusätzliche Pufferspeicher zwecks Überbrückung vorgesehen.

Künftig wird es Energieversorgungsunternehmen möglich sein, bei elektrischen Verbrauchern wie Wärmepumpen statt einer vollständigen Kompressorabschaltung mittels EVU-Sperre lediglich die elektrische Leistungsaufnahme zu begrenzen. Dazu wird der Logikeinheit der Wärmepumpe über eine geeignete Kommunikationsschnittstelle temporär eine maximal erlaubte elektrische Leistungsaufnahme mitgeteilt. Wärmepumpen mit drehzahlvariablem Kompressor werden üblicherweise auf eine Luft- oder Heizungswassertemperatur und damit indirekt auf eine thermische Leistung geregelt.

Die Aufgabe der Erfindung ist daher, ein Verfahren zur Verfügung zu stellen, mit dem eine thermische Leistungsregelung des Kompressors mit einer Limitierung der elektrischen Leistungsaufnahme so zu kombinieren ist, dass Anforderungen des Energieversorgungsunternehmens erfüllt sind und dabei der Einfluss auf den Kundenkomfort minimiert wird.

Die Erfindung löst die Aufgabe durch ein Verfahren gemäß Anspruch 1 zur Überlagerung eines Temperatursollreglers mit einem Leistungslimitierungsregler. Das Verfahren besteht dabei aus folgenden Schritten:
- Prüfung, ob ein externes Leistungslimit vorliegt,
- Prüfung, ob der Kompressor außer Betrieb ist,
- wenn beide Bedingungen erfüllt sind, Vorhersage des Kompressorleistungsbedarfs mittels eines zentralen Steuergeräts,
- dann Prüfung, ob der ermittelte Kompressorleistungsbedarf oberhalb des externen Leistungslimits liegt mit Prüfung, ob ein Starten des Kompressors möglich ist,
- dann Starten des Kompressors, wenn der ermittelte Kompressorleistungsbedarf unterhalb des externen Leistungslimits liegt.
- Wenn der Kompressor in Betrieb ist und ein externes Leistungslimit vorliegt,
- dann Limitierung der Kompressordrehzahl auf die Leistungsaufnahme entsprechend dem externen Leistungslimit,
- Prüfung, ob das externe Leistungslimit unterhalb des minimalen Kompressorleistungsbedarfs liegt,
- Prüfung, ob Schutzfunktionen gegen eine Abschaltung sprechen,
- Wenn nein: Abschaltung des Kompressors, sonst Fortsetzung des Schutzbetriebs.

In einer Ausgestaltung werden für die Vorhersage des Kompressorleistungsbedarfs die folgenden Temperatur-Kenngrößen mit jeweils einem Korrekturwert verwendet: - Temperatur-Sollwert, ± Korrekturwert 1,
- Temperatur-Istwert Gebäudekreis ± Korrekturwert 2,
- Temperatur-Istwert Umweltkreis ± Korrekturwert 3.

Üblicherweise liegen der Korrekturwert 1 zwischen 0 bis -15 K, der Korrekturwert 2 zwischen 1 bis 3 K und der Korrekturwert 3 zwischen -3 bis - 9K. Sie werden vom Fachmann entsprechend Erfahrungswerten sowie mittels der Pinch-Point-Methode bestimmt.

Der Kompressorleistungsbedarf kann in einer Ausführung über folgenden Zusammenhang bestimmt werden: Kompressorleistungsbedarf = f(Verdampfungstemperatur, Verflüssigungstemperatur). Diese Art der Leistungsbestimmung kann dabei nur zur Laufzeit des Kompressors erfolgen, da andernfalls aufgrund des sich einstellenden Druckausgleichs innerhalb des Kältekreises keine sinnvolle Verdampfungs-/Verflüssigungstemperatur zur Verfügung steht. Außerhalb der Laufzeit werden stattdessen folgende Zusammenhänge genutzt: In der Betriebsart Heizen: Verflüssigungstemperatur = Gebäudekreistemperatur-Sollwert ± Korrekturwert. Vor dem Starten des Kompressors ist folgendes bekannt: Startdrehzahl des Kompressors, Aktueller Volumenstrom, Aktuelle Gebäudekreisrücklauftemperatur, also Temperatur vor dem Verflüssiger. Die zu erwartende Verflüssigungsleistung ist eine bekannte Gerätecharakteristik und kann über Vortests bestimmt werden. Mit diesen Informationen wird ermittelt, ob die Wärmepumpe nach Starten des Kompressors die Vorlaufsolltemperatur erreicht bzw. wieviel Abweichung zu erwarten ist. Statt der Ermittlung der zu erwartenden Heizleistung mittels Vortests kann in einer weiteren Ausführung natürlich auch die zu erwartende Verflüssigungleistung über einen geeigneten Algorithmus vorherbestimmt werden.

Damit kann die zu erwartende Gebäudekreisvorlauftemperatur, also die Temperatur nach dem Verflüssiger, nach Q = m x cp x dT definiert werden. Mit diesen Informationen wird der oben genannte Korrekturwert auf Basis der jeweiligen Wärmeaustauschercharakteristik entsprechend dem Pinch Point des verwendeten Verflüssigers definiert.

In einer weiteren Ausgestaltung wird für die Vorhersage des Kompressorleistungsbedarfs eine Kompressor-Startdrehzahl zwischen 40 und 60 rps vorgegeben.

In einer weiteren Ausgestaltung wird für die Limitierung der Kompressorleistungsaufnahme die Differenz zwischen gefordertem Leistungslimit und aktueller Kompressorleistungsaufnahme durch einen Leistungslimitierungsregler kontinuierlich in Korrelation gesetzt und daraus ein Kompressordrehzahllimit bestimmt welches als zusätzliche Eingangsgröße dem Temperatursollwertregler zur Verfügung gestellt wird.

In einer weiteren Ausgestaltung wird für die Abschaltung des Kompressors geprüft, ob die aktuelle Kompressorleistungsaufnahme während des Kompressorbetriebs für eine definierte Zeitdauer, vorzugsweise 3 bis 8 Minuten, über dem geforderten Leistungslimit liegt, erst dann wird der Kompressor abgeschaltet.

In einer weiteren Ausgestaltung werden als Schutzbetrieb die Betriebsarten "Kompressormindestlaufzeit", "Abtauprozess", "Frostschutz" und "Ölrücklaufprozess" berücksichtigt.

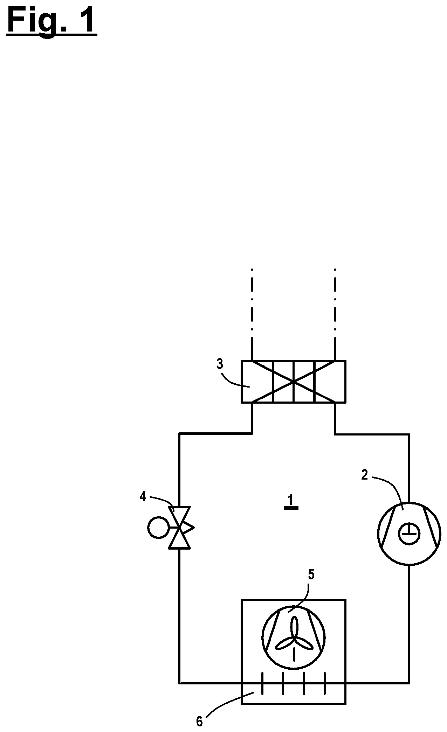

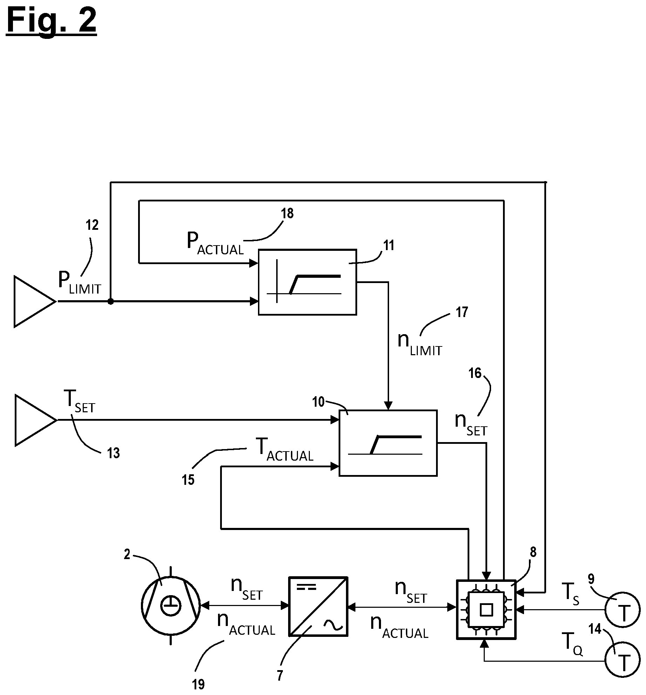

Die Erfindung wird an einem Beispiel anhand von Fig. 1 und Fig. 2 näher erläutert. Fig. 1 skizziert eine Wärmepumpe nach herkömmlichem Stand der Technik, Fig. 2 die kombinierte Temperatursoll- und Leistungslimitierungsregelung.

Fig.1 zeigt schematisch und exemplarisch den Kältekreis 1 einer Luft/Wasser-Wärmepumpe, der zumindest aus einem drehzahlvariablen Kompressor 2, einem Kältemittel/Wasser Wärmeaustauscher 3, einem Expansionsorgan 4, einem Lüfter 5 und einem Luft/Kältemittel Wärmeaustauscher 6 besteht. Das vorliegende Verfahren ist dabei auch für andere hier nicht dargestellte Wärmepumpenbauarten wie Sole/Wasser oder Grundwasser/Wasser Wärmepumpen einsetzbar. In diesem Fall kommt statt dem dargestellten Luft/Kältemittel Wärmeaustauscher 6 ein entsprechender Sole/Kältemittel- oder Grundwasser/Kältemittel Wärmeaustauscher und statt dem Lüfter 5 eine geeignete Fluid-Umwälzpumpe zum Einsatz. Elektrisch betriebene Wärmepumpen können dabei mindestens in einer ersten Betriebsart "Heizen" thermische Energie bereitstellen, die sich für Gebäudeheizwecke und/oder der Trinkwassererwärmung nutzen lassen. Dabei Umgebungswärme mittels des Lüfters 5 und über den Luft/Kältemittel Wärmeaustauscher 6 auf den Kältekreis 1 übertragen, durch den elektrisch angetriebenen Kompressor 2 mittels Druckanstieg auf ein höheres energetisches Niveau gebracht (oder "gepumpt") und über den Kältemittel/Wasser Wärmeaustauscher 3 als Nutzwärme verfügbar gemacht.

Fig*.* 2 zeigt das Reglerschema. Liegt ein Leistungslimit 12 seitens des Energieversorgers vor und der Kompressor 2 ist zu diesem Zeitpunkt nicht aktiv, dann wird mittels eines zentralen Steuergeräts 8 permanent durch ein geeignetes Vorhersagefahren geprüft, ob ein Starten des Kompressors 2 innerhalb des anliegenden Leistungslimits 12 möglich ist. Dabei erfolgt die Vorhersage der elektrischen Leistungsaufnahme des Kompressors auf Basis folgender Kenngrößen:
- Temperatur-Sollwert 13 ± Korrekturwert 1 (vorzugsweise 0 ... -15 K)
- Temperatur-Istwert Gebäudekreis 9 ± Korrekturwert 2 (vorzugsweise 1 ... 3K)
- Temperatur-Istwert Umweltkreis 14 ± Korrekturwert 3 (vorzugsweise -3 ... - 9K)
- Kompressor-Startdrehzahl (vorzugsweise 40 ... 60 rps)

Das Vorhersagemodell selbst beruht auf einem mathematischen Zusammenhang der Form Vorhersageleistung = f(Kenngrößen) und ist vorzugsweise durch Kennlinienmodelle oder Polynomfunktionen realisiert. Liegt die vom zentralen Steuergerät 8 prognostizierte Vorhersageleistung über dem aktuellen Leistungslimit 12, dann wird trotz einer eventuellen Anforderung ein Starten des Kompressors 2 blockiert.

Während eines Kompressorbetriebs sorgt zunächst der Temperaturregler 10 dafür, dass der Kompressor 2 über den Wechselrichter 7 so angesteuert wird, dass eine geforderte Temperatur erreicht ist. Dazu wird die Differenz zwischen Temperatur-Sollwert 13 und Temperatur-Istwert Gebäudekreis 9 durch den Temperaturregler 10 kontinuierlich in Korrelation gesetzt und daraus eine Kompressor-Solldrehzahl 16 bestimmt, die über das zentrale Steuergerät 8 und dem Wechselrichter 7 an den Kompressor 2 adressiert wird.

Liegt zeitgleich zum Temperatur-Sollwert 13 ein Leistungslimit 12 vor, wird durch den Leistungslimitierungsregler 11 kontinuierlich die Differenz zwischen gefordertem Leistungslimit 12 und aktueller Kompressor-Leistungsaufnahme 18 in Korrelation gesetzt und daraus ein Kompressor-Drehzahllimit 1) bestimmt welches als zusätzliche Eingangsgröße dem Temperatur-Sollwertregler 10 zur Verfügung gestellt wird. Dadurch wird die durch den Temperatur-Sollwertregler 10 bestimmte Kompressor-Solldrehzahl 16 durch das Kompressor-Drehzahllimit 17 nach oben begrenzt.

Die aktuelle Kompressorleistungsaufnahme 18)wird vorzugsweise durch ein Rechenmodell auf Basis von Kennlinienmodellen oder Polynomfunktionen wie zuvor beschrieben umgesetzt, wobei dann die Kompressorstartdrehzahl durch die aktuelle KompressorDrehzahl 19 ersetzt wird oder durch eine direkte Bestimmung der Leistungsaufnahme mittels geeigneter Sensorik.

Übliche in Wärmepumpen eingesetzte drehzahlvariable Kompressoren 2 können nur in einem bestimmten Drehzahlbereich betrieben werden. Bezogen auf die maximal mögliche Drehzahl, die üblicherweise im Bereich von 120 rps liegt, können übliche Kompressoren 2 eine Mindestdrehzahl von 25 .. 30 rps bereitstellen. Liegt ein entsprechend niedriges Leistungslimit 12 vor, dann kann dieses möglicherweise auch mit der Mindestdrehzahl des Kompressors 2 nicht erfüllt werden. Weiterhin hängt die Leistungsaufnahme des Kompressors 2 auch maßgeblich vom aktuellen Temperatur-Istwert Gebäudekreis 9 und des Temperatur-Istwert Umweltkreis 14 ab, so dass eine Vorhersage zur Laufzeit des Kompressors kaum sinnvoll möglich ist. Daher erfolgt eine Kompressorabschaltung unter folgenden Bedingungen:

Die eine Bedingung ist, dass das Leistungslimit 12 innerhalb einer definierten Zeit nicht erreicht wird. Liegt die aktuelle Kompressorleistungsaufnahme 18 während des Kompressorbetriebs 2 für eine definierte Zeitdauer, vorzugsweise 3 bis 8 min, über dem geforderten Leistungslimit 12, dann wird der Kompressor 2 nach dieser Zeitdauer abgeschaltet.

Die andere Bedingung ist, dass das Leistungslimit 12 unterhalb eines im Steuergerät (8) als Parameter festgelegten absolutem Leistungsminimalwert liegt, dann wird der Kompressor unmittelbar abgeschaltet.

Dabei werden sogenannte Schutzfunktionen höher priorisiert als die zuvor beschriebene Kompressorabschaltung wegen Überschreitung des Leistungslimits 12. Als Schutzfunktionen gelten dabei:
- die Wärmepumpe befindet sich in der Kompressormindestlaufzeit (vorzugsweise 3 bis 6 min),
- die Wärmepumpe befindet sich im Abtauprozess (vorzugsweise 5 bis 10 min),
- die Wärmepumpe befindet sich im Ölrücklaufprozess (vorzugsweise 1 bis 3 min).

### Liste der Bezugszeichen

- 1: Kältekreis
- 2: Kompressor
- 3: Kältemittel/Wasser-Wärmetauscher
- 4: Expansionsorgan
- 5: Lüfter
- 6: Luft/Kältemittel- oder Luft/Kühlmittel-Wärmeaustauscher
- 7: Wechselrichter
- 8: Zentrales Steuergerät
- 9: Temperatursensor Gebäude
- 10: Temperatursollregler
- 11: Leistungslimitierungsregler
- 12: Leistungslimit
- 13: Temperatur-Sollwert
- 14: Temperatursensor Umwelt
- 15: Temperatur-Istwert Gebäude
- 16: Kompressor-Solldrehzahl
- 17: Kompressor-Drehzahllimit
- 18: Kompressor-Leistungsaufnahme
- 19: Kompressor-Istdrehzahl

## Patentansprüche

1. Verfahren zum Betrieb einer Wärmepumpe mit einem Kältekreis (1), einem drehzahlvariablen Kompressor (2), einem Kältemittel/Wasser Wärmeaustauscher (3), einem Expansionsorgan (4), einem Lüfter (5) oder einer Fluid--Umwälzpumpe und einem Luft/Kältemittel Wärmeaustauscher (6) oder ein Sole/Kältemittel- oder Grundwasser/Kältemittel Wärmeaustauscher, deren Leistungsaufnahme durch ein externes Leistungslimitierungssignal beschränkt wird, durch Überlagerung eines Temperatursollreglers mit einem Leistungslimitierungsregler,
wobei das Verfahren die Abfolge der Schritte umfasst:
- Prüfung, ob ein externes Leistungslimit (12) vorliegt,
- Prüfung, ob der Kompressor (2) außer Betrieb ist,
- wenn beide Bedingungen erfüllt sind, Vorhersage des Kompressorleistungsbedarfs mittels eines zentralen Steuergeräts,
- dann Prüfung, ob der ermittelte Kompressorleistungsbedarf oberhalb des externen Leistungslimits (12) liegt mit Prüfung, ob ein Starten des Kompressors (2) möglich ist,
- dann Starten des Kompressors (2), wenn der ermittelte Kompressorleistungsbedarf unterhalb des externen Leistungslimits (12) liegt.
- Wenn der Kompressor (2) in Betrieb ist und ein externes Leistungslimit (12) vorliegt,
- dann Limitierung der Kompressordrehzahl auf die Kompressor-Leistungsaufnahme (18) entsprechend dem externen Leistungslimit (12),
- Prüfung, ob das externe Leistungslimit 12) unterhalb des minimalen Kompressorleistungsbedarfs liegt,
- Prüfung, ob Schutzfunktionen gegen eine Abschaltung sprechen,
- Wenn nein: Abschaltung des Kompressors (2), sonst Fortsetzung des Schutzbetriebs.

2. Verfahren nach Anspruch 1 wobei
für die Vorhersage des Kompressorleistungsbedarfs die folgenden Temperatur-Kenngrößen mit jeweils einem Korrekturwert verwendet werden:
- Temperatur-Sollwert (13), ± Korrekturwert 1,
- Temperatur-Istwert Gebäudekreis (15) ± Korrekturwert 2,
- Temperatur-Istwert Umweltkreis (14) ± Korrekturwert 3.

3. Verfahren nach Anspruch 1 wobei
für die Vorhersage des Kompressorleistungsbedarfs eine Kompressor-Startdrehzahl zwischen 40 und 60 rps vorgegeben wird.

4. Verfahren nach Anspruch 1, wobei
für die Limitierung der Kompressor-Leistungsaufnahme (18) die Differenz zwischen gefordertem Leistungslimit (12) und aktueller Kompressor-Leistungsaufnahme (18) durch einen Leistungslimitierungsregler (11) kontinuierlich in Korrelation gesetzt und daraus ein Kompressor-Drehzahllimit(17) bestimmt wird, welches als zusätzliche Eingangsgröße dem Temperatursollregler (10) zur Verfügung gestellt wird.

5. Verfahren nach Anspruch 1, wobei
für die Abschaltung des Kompressors (2) geprüft wird, ob die aktuelle Kompressor-Leistungsaufnahme (18) während des Kompressorbetriebs für eine definierte Zeitdauer, vorzugsweise 3 bis 8 Minuten, über dem geforderten Leistungslimit (12) liegt, und erst wenn dies der Fall ist, der Kompressor (2) abgeschaltet wird.

6. Verfahren nach einem der Ansprüche 1 bis 5, wobei
für die Abschaltung des Kompressors (2) geprüft wird, ob eine der Betriebsarten "Kompressormindestlaufzeit", "Abtauprozess", "Frostschutz" und "Ölrücklaufprozess" als Schutzbetrieb vorliegt.

## Claims

1. Method for operating a heat pump with a refrigeration circuit (1), a variable-speed compressor (2), a refrigerant/water heat exchanger (3), an expansion device (4), a fan (5) or a fluid circulation pump, and an air/refrigerant heat exchanger (6) or a brine/refrigerant or groundwater/refrigerant heat exchanger, whose power consumption is limited by an external power limitation signal, by superimposing a temperature setpoint controller with a power limitation controller, wherein the method comprises the sequence of steps:
- checking whether an external power limit (12) is present,
- checking whether the compressor (2) is out of operation,
- if both conditions are met, predicting the compressor power requirement by means of a central control unit,
- then checking whether the determined compressor power requirement is above the external power limit (12) with checking whether it is possible to start the compressor (2),
- then starting the compressor (2) if the determined compressor power requirement is below the external power limit (12).
- If the compressor (2) is in operation and an external power limit (12) is present,
- then limit the compressor speed to the compressor power consumption (18) corresponding to the external power limit (12),
- Check whether the external power limit (12) is below the minimum compressor power requirement.
- Check whether protective functions prevent shutdown.
- If no: shutdown of the compressor (2), otherwise continuation of protective operation.

2. Method according to claim 1, wherein the following temperature parameters, each with a correction value, are used to predict the compressor power requirement:
- Temperature setpoint (13), ± correction value 1,
- actual temperature value of the building circuit (15) ± correction value 2,
- actual temperature value of the environmental circuit (14) ± correction value 3.

3. Method according to claim 1, wherein a compressor start speed between 40 and 60 rps is specified for predicting the compressor power requirement.

4. Method according to claim 1, wherein for limiting the compressor power consumption (18), the difference between the required power limit (12) and the current compressor power consumption (18) is continuously correlated by a power limitation controller (11) and a compressor speed limit (17) is determined from this, which is made available to the temperature setpoint controller (10) as an additional input variable.

5. Method according to claim 1, wherein, for switching off the compressor (2), a check is made as to whether the current compressor power consumption (18) during compressor operation is above the required power limit (12) for a defined period of time, preferably 3 to 8 minutes, and only if this is the case is the compressor (2) switched off.

6. Method according to one of claims 1 to 5, wherein, in order to switch off the compressor (2), a check is made as to whether one of the operating modes "minimum compressor running time", "defrosting process", "frost protection" and "oil return process" is present as a protective operation.

## Revendications

1. Procédé de fonctionnement d'une pompe à chaleur avec un circuit de réfrigération (1), un compresseur à vitesse variable (2), un échangeur de chaleur réfrigérant/eau (3), un organe d'expansion (4), un ventilateur (5) ou une pompe de circulation de fluide et un échangeur de chaleur air/réfrigérant (6) ou un échangeur de chaleur saumure/réfrigérant ou eau souterraine/réfrigérant, dont la puissance absorbée est limitée par un signal de limitation de puissance externe, par superposition d'un régulateur de température de consigne avec un régulateur de limitation de puissance,
dans lequel le procédé comprend la succession des étapes consistant à :
- vérifier si une limite de puissance externe (12) se présente,
- vérifier si le compresseur (2) est hors service,
- si les deux conditions sont remplies, prédire la puissance de compresseur requise au moyen d'un appareil de commande central,
- vérifier ensuite si la puissance de compresseur requise déterminée est supérieure à la limite de puissance externe (12) et vérifier si un démarrage du compresseur (2) est possible,
- démarrer ensuite le compresseur (2) si la puissance de compresseur requise déterminée est inférieure à la limite de puissance externe (12),
- si le compresseur (2) est en service et une limite de puissance externe (12) se présente,
- limiter la vitesse de compresseur à la puissance absorbée de compresseur (18) correspondant à la limite de puissance externe (12),
- vérifier si la limite de puissance externe (12) est inférieure à la puissance de compresseur minimale requise,
- vérifier si des fonctions de protection s'opposent à un arrêt,
- si non : arrêter le compresseur (2), sinon poursuivre le fonctionnement de protection.

2. Procédé selon la revendication 1, dans lequel les grandeurs caractéristiques de température suivantes sont utilisées avec une valeur de correction respective pour la prédiction de la puissance de compresseur requise :
- valeur de consigne de température (13), ± valeur de correction 1,
- valeur réelle de température de circuit de bâtiment (15) ± valeur de correction 2,
- valeur réelle de température de circuit d'environnement (14) ± valeur de correction 3.

3. Procédé selon la revendication 1, dans lequel une vitesse de démarrage de compresseur entre 40 et 60 tr/s est prédéfinie pour la prédiction de la puissance de compresseur requise.

4. Procédé selon la revendication 1, dans lequel, pour limiter la puissance absorbée de compresseur (18), la différence entre la limite de puissance requise (12) et la puissance absorbée de compresseur actuelle (18) est mise en corrélation en continu par un régulateur de limitation de puissance (11) et une limite de vitesse de compresseur (17) en est déduite, laquelle est mise à disposition du régulateur de consigne de température (10) en tant que grandeur d'entrée supplémentaire.

5. Procédé selon la revendication 1, dans lequel, pour l'arrêt du compresseur (2), il est vérifié si la puissance absorbée de compresseur actuelle (18) pendant le fonctionnement du compresseur est supérieure à la limite de puissance requise (12) pendant une durée définie, de préférence de 3 à 8 minutes, et uniquement lorsque cela est le cas, le compresseur (2) est arrêté.

6. Procédé selon l'une quelconque des revendications 1 à 5, dans lequel, pour arrêter le compresseur (2), il est vérifié si un des modes de fonctionnement « durée minimale de fonctionnement du compresseur », « processus de dégivrage », « protection contre le gel » et « processus de retour d'huile » se présente en tant que mode de protection.
